# EUROPÄISCHE PATENTANMELDUNG

(11) **EP 1 273 712 A1**
(43) Veröffentlichungstag der Anmeldung: **08.01.2003**
(21) Anmeldenummer: 02405546.9
(22) Anmeldetag: 01.07.2002
(51) Int. Cl.: E02B 3/10

(54) **Mobiles Hochwasserschutzsystem**

(30) Priorität: 05.07.2001 CH 12492001
(71) Anmelder: Scheibe, Klaus Wolfgang, 8038 Zürich (CH)
(72) Erfinder: Scheibe, Klaus Wolfgang, 8038 Zürich (CH)
(74) Vertreter: EGLI-EUROPEAN PATENT ATTORNEYS

(57) **Zusammenfassung**

Verbauelement für Hochwasserschutz, mit einem Kanalelement (1), einem vertikal beweglichen Schutzelement (2), und einem Antriebsmittel zum Bewegen des Schutzelementes (2) wobei das Schutzelement (2) jede Höhenstellung zwischen einer ersten und einer zweiten vertikalen Stellung einnehmen und arretiert werden kann, wobei die Bewegungsfuge zwischen Schutzelement und Kanalelement mittels Dichtleiste (4) den Kanal (1) gegen eindringendes Wasser abdichtet. In einer besonderen Ausgestaltung weisen die Schutzelemente (2) eine klapp- oder drehbare Einrichtung (15) an ihrem oberen Ende zum Vergrössern der Schutzhöhe auf. Alternativ kann ein Teleskopmechanismus die Anstauhöhe über die Kanaltiefe hinaus vergrössern. Ein Hochwasserschutzsystem besteht aus mehreren Verbauelementen, die wasserabdichtend aneinandergereiht sind. Im Grundriss sind die Schutzelemente (2) und die Kanalelemente (1) recht-, stumpf- und/oder spitzwinklig ausgebildet und weisen konvexe und/oder konkave Bereiche auf.

## Beschreibung

Die Erfindung betrifft ein Hochwasserschutzsystem mit einem oder mehreren Schutzelementen, gemäss dem Oberbegriff des Anspruchs 1. Insbesondere betrifft die Erfindung ein solches System, bei dem die Schutzelemente vertikal bewegt werden und damit im ausgefahrenen Zustand ein Hochwasserschutz errichtet wird.

Hochwasserschutz ist insbesondere in dichtbesiedelten Gebieten, die durch Flüsse, Seen oder auch durch ihre Meeresnähe hochwassergefährdet sind, ein seit längerer Zeit bestehendes und erkanntes Problem. Während in Gebieten mit häufigem Gefährdungspotential, insbesondere in Küstengebieten mit Sturmflutgefahr, insbesondere Deiche mit einer dem maximalen Gefährdungspotential entsprechenden Schutzhöhe zum Einsatz kommen, ist es lange Zeit üblich gewesen, sich in Gebieten mit nur gelegentlichem Hochwassergefährdungspotential auf Notmassnahmen z.B. mit dem Abschotten von Gebieten mit Sandsäcken bei akuter Gefahr zu beschränken. Insbesondere an Flüssen und anderen Gewässern mit ähnlichem Gefährdungspotential war aber seit langem auch ein anderer Hochwasserschutz bekannt und üblich, nämlich die Flutung von speziellen Überflutungsgebieten, bei denen z.B. als Wiesen kein nennenswerter Schaden zu befürchten war. Durch dieses gesteuerte Fluten wurde der Hochwasserpegel an den gefährdeten Stellen massiv gesenkt und damit das akute Gefährdungspotential vermindert.

Durch den gestiegenen Zivilisationsdruck aber wurde die Ausweisung von entsprechenden Überflutungsgebieten immer schwieriger, so dass in den letzten Jahren an vielen Stellen der Welt Überschwemmungen auch von besiedeltem Gebiet mit untragbar grossen Schäden auftraten. Zudem ist auch das von den Gewässern ausgehende Gefährdungspotential dadurch angestiegen, dass insbesondere Flüsse mehr und mehr begradigt, kanalisiert oder auf andere Art eingeengt wurden, so dass ihnen ihre natürlichen Ausweichmöglichkeiten im Hochwasserfall genommen wurden.

Selbstverständlich ist es möglich, mit Dämmen, Mauern und Deichen entsprechender Bauhöhe die Gefährdung von besiedeltem Gebiet zu mindern oder ganz auszuschalten. Allerdings verlaufen die Grenzen zwischen dem Gewässer, von dem die Gefährdung ausgeht und den gefährdeten Zonen in vielen Fällen gerade in besiedeltem Gebiet, so dass eine Verbauung mit solchen Dämmen und Deichen nicht auf die zur Sicherung notwendige Akzeptanz stösst. Insbesondere wird gewünscht oder verlangt, dass die baulichen Massnahmen baulich nicht oder nur wenig störend wirken, wenn die Gefährdung nicht akut ist, also bei normalem oder nur gering erhöhtem Wasserstand.

Grundsätzlich ist es bekannt, mit solchen baulichen Massnahmen Schutzzonen gegen Überschwemmungen zu schaffen, dass die Schutzelemente ohne akute Gefährdung ganz oder teilweise abgesenkt werden können. Dabei gibt es grundsätzlich zwei verschiedene Schutzmöglichkeiten, bzw. das vertikale Ausfahren von Schutzwänden oder das Hochklappen von Schutzelementen, wobei - je nach den möglichen baulichen Rahmenbedingungen - der einen oder der anderen Schutzart der Vorzug zu geben ist.

Aus der DE-195 14 205 A1 ist z.B. eine bauliche Massnahme mit klappbaren Elementen bekannt, bei der eine Aufnahmekammer einerseits eine flutbare Schwimmkammer und andererseits eine Einschwenkkammer umfasst und das Schwenkelement aus der Horizontalen in die Vertikale geschwenkt wird. Die dort beschriebene bauliche Massnahme basiert auf der Grundidee, das Ausschwenken durch das Aufschwimmen der als Pontonteile ausgebildeten Schutzwand in der Schwimmkammer zu bewirken oder zumindest zu unterstützen.

In vielen Fällen allerdings ist es aus Gründen der baulichen Begebenheiten nicht möglich oder sinnvoll, solche schwenkbaren Elemente einzusetzen. Die Nachteile dieser Lösung sind die folgenden:
- Dimensionierung und somit Gewicht des Drehelementes werden weniger durch hydrostatische Andrücke, vielmehr durch Verkehrslasten in der liegenden Position bestimmt,
- schwerere Drehelement-Ausführung erfordert massive Drehlager,
- bedingt mehr Antriebsleistung beim Aufrichten
- mehr Krafteinleitung in den Kanalquerschnitt,
- entsprechenden Mehraufwand für Dimensionierung des Kanals
- sorgfältige Auflager und Arretierung infolge Überfahrverkehr in der Horizontalen wegen Schub-, Bewegungsund Verwindungskräften
- aufwendige Ecklösungen bei sog. positiver und negativer Eckausbildung (Überschneidungen)
- Sonderausführung von Dreh- und Kanalelementen bei wenig linearer Verbaulinie
- kleine Serien gleichartiger Elemente mit entsprechenden Kostenkonsequenzen
- beim Aufrichten bilden die Mobil-Elemente eine Verbaulinie in immer gleicher Höhe auch bei unterschiedlichen Pegelständen
- in horizontaler Position mehr Flächenbedarf, ca. um die Breite des Elementes
- Fundamentierung unter dem Element bei Überfahrbarkeit.

In diesen Fällen bietet es sich aber an, reine Vertikallösungen vorzusehen, bei denen die - üblicherweise plattenförmigen - Schutzelemente im wesentlichen vertikal verschoben werden. Eine solche Lösung ist z.B. aus der DE-A-44 37 098 bekannt, in der vorgeschlagen wird, eine Schutzwand aus einer Kanalgrube nach oben auszufahren und somit eine mobile Schutzwand aufzubauen. In der DE-A-44 37 098 werden allerdings keine Massnahmen vorgeschlagen, um von einem wesentlichen Vorteil des Vertikalsystems, nämlich der beliebigen Schutzhöheneinstellung, vollumfänglich Gebrauch machen zu können.

Damit ergibt sich als Aufgabe der Erfindung, ein Hochwasserschutzelement und ein Hochwasserschutzsystem aus solchen Schutzelementen vorzuschlagen, bei denen die oben beschriebenen Nachteile eines Schwenksystem nicht in Kauf genommen werden müssen, wobei betont werden muss, dass es Anwendungsfälle gibt, in denen die Schwenksystem Vorteile haben. Weiterhin ist es die Aufgabe der Erfindung, den beschränkten Ausgestaltungsvorschlag der DE-A-44 37 098 zu überwinden und Massnahmen vorzusehen, mit denen die Schutzhöhe je nach unterschiedlichem Bedrohungsszenarium gewählt und auch abgesichert werden kann.

Wünschenswert ist dabei eine Ausgestaltung, bei der die Schutzhöhe vom Umfang der notwendigen Tiefbaumassnahme entkoppelt werden kann, insbesondere eine Schutzhöhe erreicht werden kann, die eigentlich durch die Kanaltiefe nicht vorgesehen ist.

Die Aufgabe der Erfindung wird durch Verbauelemente nach Anspruch 1 gelöst. Dabei haben die Massnahmen der Erfindung zunächst einmal zur Folge, dass eine beliebige Schutzhöhe erreicht und - durch die Arretierung - abgesichert werden kann. Dabei ist es wichtig, dass der Kanal in jeder Höhe wasserseitig abgedichtet wird.

Beim erfindungsgemässen Schutz handelt es sich um ein am Ort festinstalliertes Schutzsystem.

Die Antriebstechnik und die Art der Befestigung sind so ausgelegt, dass sie die Arretierung des Mobil-Elementes in jeder Höhen-Position erlauben.

Eine besonders vorteilhaften Ausführung wird durch die Erhöhung des Schutzbereichs über die Ausfahrhöhe hinaus bewirkt, wobei einerseits eine zusätzliche Dreh- oder Schwenklösung in Frage kommt, andererseits aber auch eine Teleskoplösung Bei dieser Lösung sind auch Ausgestaltungen möglich und sinnvoll, bei denen die Abdichtung herkömmlich ausgestaltet wird, also durch eine Dichtleiste mit Wirkung im voll ausgefahrenen und geklappten Zustand.

Der erfindungsgemässe Hochwasserschutz eignet sich sowohl für Linienverbauten wie auch für Objektschutz jeglicher Art. Mehrzwecknutzbar kann das System in freier Landschaft wie auch in sehr verbauten Agglomerationen angeordnet werden, vorzugsweise niveaugleich im Gelände positioniert.

Weitere vorteilhafte Einzelheiten der Erfindung sind in den Unteransprüchen dargelegt.

Die vorgenannten sowie die beanspruchten und in den nachfolgenden Ausführungsbeispielen beschriebenen erfindungsgemäß zu verwendenden Elemente unterliegen in ihrer Größe, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können. Dimensionierung und Materialwahl richten sich nach Anstauhöhe und Verkehrsbelastungen des Drehelementes.

Weitere Einzelheiten, Merkmale und Vorteile des Gegenstandes der Erfindung ergeben sich aus der nachfolgenden Beschreibung der dazugehörigen Zeichnungen, in denen - beispielhaft - ein Hochwasserschutzsystem zur vorliegenden Erfindung erläutert wird.

In der Zeichnung zeigen:
- Fig. 1: eine Grundanordnung der Hauptkomponenten des Verbausystems von der Seite, mit den Hauptkomponenten Kanalelement, vertikal ein- und ausfahrbares Schutzelement, der der Höhe "h2" nach variablen Verbindung zwischen Element und Kanal sowie der Antriebsvorrichtung; das ein- und ausfahrbares Element ist, um die variable Höhe "h1" aus- und einfahrbar;
- Fig. 2.1: die Grundanordnung nach Figur 1 in niveaugleicher Positionierung;
- Fig. 2.2: die Grundanordnung nach Figur 1, bei dem das Schutzelement in etwa zur Hälfte in Schutzposition ausgefahren;
- Fig. 2.3: die Grundanordnung nach Figur 1, mit dem Schutzelement in max. ausgefahrener Position;
- Fig. 3: eine erste Anordnung zu einer besonders vorteilhaften Ausführung der Erfindung, bei der die Schutzhöhe um die Höhe des in die Vertikale drehbaren Elementes vergrössert ist;
- Fig. 4: eine variable Anordnung der Systemelemente im Grundriss zu den Ausführungsbeispielen nach Figur 1 und/oder nach Figur 3 mit jeweils mindestens einer Dichtleiste zwischen den Schutzelementen, angepasst an den vorgegebenen Verlauf der verbaulinie;
- Fig. 5: eine Anordnung des Systems, ähnlich zu Fig. 4 mit einer im Linienverlauf vollends abgedichteten Verbaulinie mit spitz- und stumpfwinkligen Ecken sowie auch Rundungen.
- Fig. 6a: eine zweite Anordnung zu einer besonders vorteilhaften Ausführung der Erfindung, bei der die Schutzhöhe um die Höhe des in die Vertikale drehbaren Elementes vergrössert werden kann; diese Darstellung zeigt das Schutzsystem im Ruhezustand;
- Fig. 6b: die Anordnung nach Figur 6a im Schutzzustand.

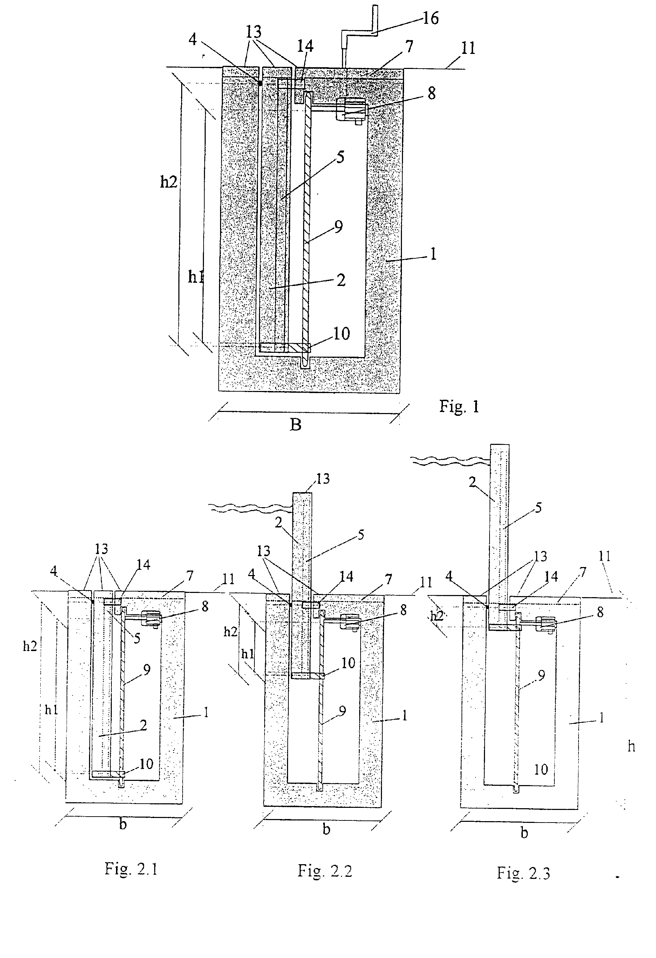

Die Mobilelemente 2 der Anordnung nach Figur 1 sind in Nichtgefahrenzeiten im Kanal 1 versenkt und können manuell oder aber vorzugsweise mittels Antriebsvorrichtung 8, 9 in beiden Bewegungsrichtungen (hoch und abwärts) um die variable Höhe h1 bewegt werden. In der untersten Position können sie mit der Oberseite und der oberen Fläche des Kanals eine ebene, ebenfalls mehrzwecknutzbare Fläche (bspw. Verkehr, Fussgänger) bilden 13.

Mittels Befestigungstechnik 5, 14 und 10, sowie Art und Anordnung der Antriebsvorrichtung 8, 9 ist das Mobilelement in jeder Position um die variable Höhe h2 konstruktiv, statisch wirksam und kraftschlüssig mit dem Kanal 1 verbunden, wie in den Figuren 2.1 bis 2.3 dargestellt. So können die auf das Schutzelement 2 wirksamen Kräfte (bspw. hydrostatische Anpresskräfte) über Verbindungsglieder 5, 14, 10, 9 in Decke, Boden respektive in die Seitenwände des Kanals eingeleitet und in den Untergrund abgetragen werden.

Das Antriebsmittel ist so ausgebildet, dass das Schutzelement 2 jede Höhenstellung zwischen der ersten vertikalen Stellung und der zweiten vertikalen Stellung einnehmen und in jeder dieser Stellungen arretiert werden kann. Zu den Seiten des Schutzelementes 2 dichtet die Bewegungsfuge zwischen Schutzelement und Kanalelement mittels einer Dichtleiste 4 den Kanal 1 in jeder Position des Schutzelementes gegen eindringendes Wasser ab. Die Antriebsvorrichtung 8, 9 ist im Kanalelement 1 angebracht und mit einem Elektromotor betrieben. Sie ist unterwasserbetriebsfähig ausgebildet. Im vorliegenden Ausführungsbeispiel umfasst das Antriebsmittel zusätzlich ein Mittel zum händischen Betreiben einer Antriebskurbel 16. Die Antriebsvorrichtung 8, 9 umfasst jeweils eine synchron angetriebene Gewindespindel 9 an den Seiten des beweglichen Schutzelementes 2, an dem jeweils eine auf der Gewindespindel aufgesetzte Mutter angebracht ist. Damit wird gewährleistet, dass das vertikale Bewegen des Schutzelementes ohne die Gefahr eines Verkantens möglich ist. Dies wird unterstützt durch eine Führungs-, Halterungs- und Arretierungseinrichtung für das Schutzelement 2.

Das Schutzelement kann entsprechend den Pegelständen und Hochwasser-Anforderungen um die jeweilige variable Bedarfshöhe h1 ein- und ausgefahren werden. Die Dimensionierung auf ganzer Höhe richtet sich nach dem hydrostatischen Druck der Pegelstände. Die Verkehrs- und Überfahrkräfte erfordern lediglich an der oberen schmalen Fläche 13 vom Drehelement und Kanal entsprechend verstärkte Detailausbildung 7 bei sonst gegenüber Drehelementen leichteren Element-Konstruktionen, kleineren und leichteren Kanalelementen und geringeren Antriebsleistungen.

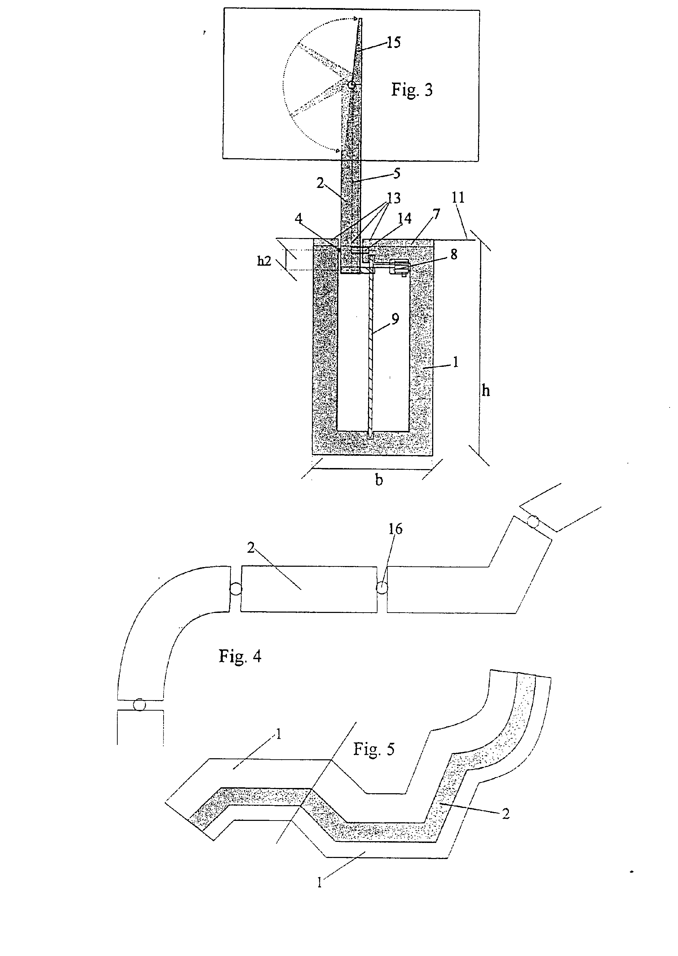

Das Schutzsystem ist im beschriebenen Ausführungsbeispiel aus den Verbauelementen zusammengestellt, indem im Grundriss einzelne Schutzelemente 2 und Kanalelemente 1 recht-, stumpf- bzw. spitzwinklig ausgebildet sind. Weiterhin weisen im Ausführungsbeispiel einzelne Schutzelemente 2 und Kanalelemente 1 konvexe und/oder konkave Bereiche auf. Die vertikale Ausfahrbarkeit der Mobilelemente um die variable Höhe h1 erlaubt jegliche Art der Anordnung und Anpassung der Verbauelemente 1, 2 an das Gelände. Zwischen den Elementen ist eine Dichtleiste 16 angebracht, die jeweils 2 Elemente oder 1 Element und ein massives Bauteil (Mauer o.ä.) gegeneinander voll abdichtet (Fig. 4). In jeder Position des Elementes sorgt eine im wesentlichen horizontal angebrachte Längsdichtung 4 zwischen der Kanalwand 1 wasserseitig und dem aufgerichteten Element 2 dafür, dass das anstehende Hochwasser nicht in den Kanal eindringt. Die Längsdichtung 4 ist als Rundprofil mit axialem Rollenlager ausgeführt und zwischen dem Kanalelement 1 und dem Schutzelement 2 befestigt ist.

In einer besonders vorteilhaften Ausführung der Erfindung nach Figur 3 wird einer grösseren Anstauhöhe entsprochen mit einem am Element 2 oben angebrachten Klapp-/ oder Drehelement 15. So können die Ausmasse des Kanals 1 trotz respektabler Anstauhöhe kleiner ausgestaltet werden, was in vielen Fällen den Einsatz des Hochwasserschutzes bei begrenzter Tiefbaumöglichkeit erst ermöglicht. Vertikalund Horizontaldichtungen bestehen aus bekannten Profilen, im Ausführungsbeispiel aus sog. Notendichtungen, die sich infolge ihrer Elastizität bei hydrostatischem Andruck jeweils gegen die zwei Berührungsflächen dichtend verpressen und die bei Bewegung der gegeneinander abzudichtenden Bauteile wegen der Elastizität nur minimale Reibungskräfte verursachen, ohne merklichen Verschleiss. Die Horizontal-Dichtung lässt sich auch drehbar mit axial angeordnetem Rollenlager ausführen, so dass das Drehelement bei Vertikalbewegung die Längsdichtung wasserseitig entlang rollen lässt.

In einer ebenfalls besonders vorteilhaften Ausführung (ohne eigene Darstellung) der Erfindung wird einer grösseren Anstauhöhe entsprochen mit einem am Element 2 angebrachten Teleskopmechanismus. Auch so können die Ausmasse des Kanals 1 trotz respektabler Anstauhöhe kleiner ausgestaltet werden, was in vielen Fällen den Einsatz des Hochwasserschutzes bei begrenzter Tiefbaumöglichkeit erst ermöglicht. Die Dichtungen sind gegenüber der Grundversion der erfinderischen Vorrichtung nicht grundsätzlich verändert, jedoch wird ein Dichtelement für jedes Teleskopelement verwendet, um wiederum zu ermöglichen, dass die Teleskopelemente in jeder Höhe angehalten und wasserdicht arretiert werden können.

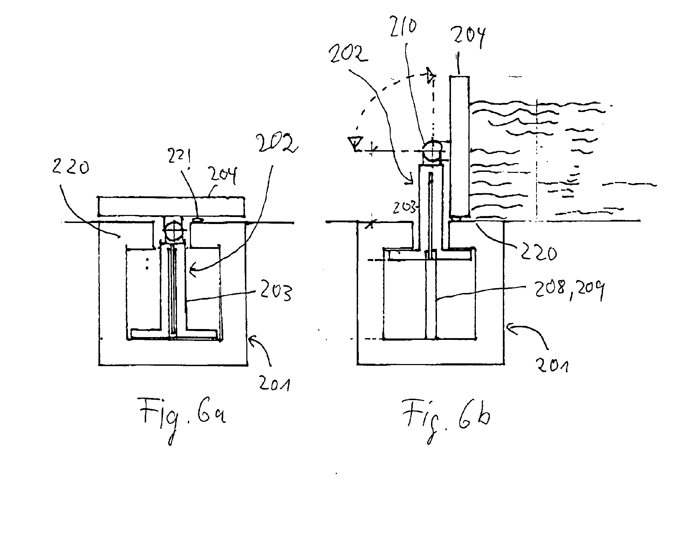

Zu der in Figur 3 gezeigten vorteilhaften Ausführungsform der Erfindung wurde eine weitere, besonders vorteilhafte Variante ausgestaltet, die in Figur 6a und b dargestellt ist. Beim einteilig ausfahrbaren Schutzelement 2 entspricht die lichte Kanaltiefe in etwa der ausfahrbaren Höhe des Schutzelementes zuzüglich konstruktiver Margen infolge Halterung und Kraftabtragung im ausgefahrenen Zustand.

Im Gegensatz dazu bietet diese Systemlösung die Möglichkeit, den Kanalquerschnitt ganz wesentlich zu verringern in etwa auf 50 % der benötigten Schutzhöhe.

Dabei ist der Kanal 201 mit stark reduzierten Abmessungen ausgebildet, während das Schutzelement 202 aus einem inneren, vertikal zu bewegenden Bauteil 203 mit einem Drehlager 210 im oberen Bereich und einer Abdeckplatte 204 besteht.

Das Drehlager 210 verbindet dieses Bauteil 203 gelenkig mit einer Abdeckplatte 204. In der unteren Ruheposition ist diese Abdeckplatte 204 horizontal gelagert. Die Halterung des Drehlagers 210 ist, bezogen auf den Querschnitt, im Ausführungsbeispiel mittig an der Abdeckplatte 204 befestigt, alternativ können aber auch andere Befestigungspunkte gewählt werden.

Mittels Antriebstechnik wird das innere Bauteil 203 vertikal angehoben und mit diesem zugleich das obere Abdeckelement 204.

In der obersten Position des Schutzelementes befindet sich das Drehlager 210 auf halber Schutzhöhe. Die volle Schutzhöhe wird erreicht durch Drehbewegung der horizontalen Abdeckplatte 204 in die Vertikale. Die Abdeckplatte 204 hat - in diesem Ausführungsbeispiel im Gegensatz zur Ausführung nach Figur 3 - in dieser Position die alleinige Funktion eines wasserabhaltenden Schutzelementes.

Beide beschriebene Bewegungen, die Vertikal- und die Drehbewegung, können je nach Antrieb und Steuerung nacheinander, synchron oder gestaffelt erfolgen.

Das Schutzelement 202 verpresst sich an der unteren Kante gegen eine horizontal, am Kanal 201 angebrachte Dichtung. Die Vertikalfugen zwischen den Schutzelementen 202 oder zwischen Schutzelement 202 und einem festen Bauteil (Mauer, Pfeiler, o.ä.) sind ebenfalls abgedichtet.

Das innere Bauteil 203 wird in der oberen Position gegen die Kanalabdeckung 220 gepresst. Die Anpressfugen sind im vorliegenden Ausführungsbeispiel ebenfalls mit horizontalen Dichtungsbändern 221 versehen.

Kanal 201 und Schutzelement 202, umfassend das innere Bauteil 203 und Abdeckplatte 204, bilden zusammen mit der Antriebsvorrichtung eine Hochwasserschutzeinheit. Diese wird in der Ruheposition niveau-gleich in den Boden eingebracht.

Wie schon bei den vorangegangenen Ausführungen erläutert, können auch in diesem Falle mehrere Einheiten zu einer Hochwasserschutzverbaulinie aneinandergereiht werden. Die Fugen zwischen den einzelnen Kanaleinheiten sind abdichtbar.

Jedwede im Grundriss abgewinkelte Verbaulinie ist mittels Gehrungsausbildung von Kanal 201 und Schutzelement 202 möglich.

Das System nach Figur 6a und 6b stellt in seiner Mehrzwecknutzung und in den äusserst geringen Abmessungen eine sehr ökonomische Lösung des Prinzips eines _{"}auf Knopfdruck" aktivierbaren Hochwasserschutzsystem dar. Es ist wegen der geringen Abmessungen auch für kleinere Verbauungen vorteilhaft einsetzbar.

## Patentansprüche

1. Verbauelement für Hochwasserschutz, mit
- einem Kanalelement (1),
- einem vertikal beweglichen Schutzelement (2), welches zumindest eine erste vertikale Stellung, in der es im Kanalelement versenkt ist, und eine zweite vertikale Stellung, in der es aus dem Kanalelement ausgefahren ist, einnehmen kann, wobei das Schutzelement mittels Verbindungsglieder (14, 5, 10, 9) mit dem Kanal verbunden ist, und
- einem Antriebsmittel zum Bewegen des Schutzelementes (2) von der ersten in die zweite Stellung und umgekehrt,
**dadurch gekennzeichnet, dass**
- das Antriebsmittel so ausgebildet ist, dass das Schutzelement (2) jede Höhenstellung zwischen der ersten vertikalen Stellung und der zweiten vertikalen Stellung einnehmen und in jeder dieser Stellungen arretiert werden kann und
- an den Seiten des Schutzelementes (2) die Bewegungsfuge zwischen Schutzelement und Kanalelement mittels Dichtleiste (4) den Kanal (1) in jeder Position des Schutzelementes gegen eindringendes Wasser abdichtet.

2. Verbauelement für Hochwasserschutz nach Anspruch 1, **dadurch gekennzeichnet, dass** die Oberflächen (13) des Kanalelementes (1) und des Schutzelementes (2), in dessen eingefahrenem Zustand, begeh- und überfahrbar sind.

3. Verbauelement für Hochwasserschutz nach Anspruch 1 oder 2, **dadurch gekennzeichnet, dass** das Antriebsmittel eine im Kanalelement (1) angebrachte Antriebsvorrichtung (8, 9) umfasst, wobei die Antriebsvorrichtung elektrisch, pneumatisch und/oder hydraulisch betrieben und unterwasserbetriebsfähig ist und die Antriebsvorrichtung jeweils eine synchron angetriebene Gewindespindel (9) an den Seiten des beweglichen Schutzelementes (2) aufweist.

4. Verbauelement für Hochwasserschutz nach einem der Ansprüche 1 bis 3, **gekennzeichnet durch** eine Führungs-(5, 9), Halterungs- (10, 14) und Arretierungseinrichtung (9, 10) für das Schutzelement (2).

5. Verbauelement für Hochwasserschutz nach einem der Ansprüche 1 bis 4, **dadurch gekennzeichnet, dass** im Grundriss das Schutzelement (2) und das Kanalelement (1) recht-, stumpf- und/oder spitzwinklig ausgebildet sind und/oder dass das Schutzelement (2) und das Kanalelement (1) konvexe und/oder konkave Bereiche aufweist.

6. Verbauelement für Hochwasserschutz nach einem der Ansprüche 1 bis 5, **dadurch gekennzeichnet, dass** das Schutzelement (2) eine klapp- oder drehbare Einrichtung (15) an seinem oberen Ende zum Vergrössern der Schutzhöhe aufweist.

7. Verbauelement für Hochwasserschutz nach einem der Ansprüche 1 bis 6, **dadurch gekennzeichnet, dass** das Schutzelement (2) eine Teleskopeinrichtung (115) zum Vergrössern der Schutzhöhe aufweist.

8. Verbauelement für Hochwasserschutz, mit
- einem Kanalelement (201),
- einem vertikal beweglichen Schutzelement (202), welches zumindest eine erste vertikale Stellung, in der es im Kanalelement versenkt ist, und eine zweite vertikale Stellung, in der es aus dem Kanalelement ausgefahren ist, einnehmen kann, wobei das Schutzelement mittels Verbindungsglieder mit dem Kanal verbunden ist, und
- einem Antriebsmittel zum Bewegen des Schutzelementes (202) von der ersten in die zweite Stellung und umgekehrt,
**dadurch gekennzeichnet, dass**
- das Schutzelement (202) eine senkbare Einrichtung (203) und eine klapp- oder drehbare Einrichtung (204), vorzugsweise am oberen Ende der senkbaren Einrichtung (203) zum Vergrössern der Schutzhöhe aufweist.

9. Verbauelement für Hochwasserschutz nach Anspruch 8, **dadurch gekennzeichnet, dass** die klapp- oder drehbare Einrichtung (204) des Schutzelementes (202) das Kanalelement (201), im eingefahrenen Zustand, begehund/oder überfahrbar abdecken.

10. Verbauelement für Hochwasserschutz nach Anspruch 8 oder 9, **dadurch gekennzeichnet, dass** sich die Abdeckplatte (204) des Schutzelementes (202) im Schutzzustand an der unteren Kante gegen eine horizontal, am Kanal (201) angebrachte Dichtung verpresst und das innere Bauteil (203) des Schutzelementes (202) in der oberen Position gegen die Kanalabdeckung (220) gepresst wird.

11. Verbauelement für Hochwasserschutz nach einem der Ansprüche 8 bis 10, **dadurch gekennzeichnet, dass** das Antriebsmittel eine im Kanalelement (201) angebrachte Antriebsvorrichtung (208, 209) umfasst, wobei die Antriebsvorrichtung elektrisch, pneumatisch und/oder hydraulisch betrieben und unterwasserbetriebsfähig ist und die Antriebsvorrichtung jeweils eine synchron angetriebene Gewindespindel (209) an den Seiten des beweglichen Schutzelementes (202) aufweist.

12. Verbauelement für Hochwasserschutz nach einem der Ansprüche 8 bis 11, **dadurch gekennzeichnet, dass** im Grundriss die senkbare Einrichtung (203) des Schutzelementes (202) und das Kanalelement (201) recht-, stumpf- und/oder spitzwinklig ausgebildet sind und/oder dass die senkbare Einrichtung (203) des Schutzelementes (202) und das Kanalelement (201) konvexe und/oder konkave Bereiche aufweist.

13. Hochwasserschutzsystem mit zumindest zwei Verbauelementen nach einem der Ansprüche 1 bis 12, **dadurch gekennzeichnet, dass** die Verbauelemente wasserabdichtend aneinandergereiht sind, wobei zwischen den Schutzelementen (2, 202) der Verbauelemente eine Dichtleiste (16) angebracht ist, die in jeder Position die Fuge zum jeweils benachbarten Schutzelement (202) als auch zu einem festen Bauteil abdichtet.

14. Hochwasserschutzsystem nach Anspruch 13, **dadurch gekennzeichnet, dass** die vertikale Dichtleiste (16) zwischen den Schutzelementen (2, 202) in einer Kerbe angebracht ist.

15. Hochwasserschutzsystem nach Anspruch 13 oder 14, **dadurch gekennzeichnet, dass** die Längsdichtung (4) als Rundprofil mit axialem Rollenlager ausgeführt ist und zwischen dem Kanalelement (1, 201) und dem Schutzelement (2, 202) befestigt ist.
